# EUROPÄISCHE PATENTSCHRIFT

(11) **EP 0 665 935 B1**
(45) Veröffentlichungstag und Bekanntmachung des Hinweises auf die Patenterteilung: **12.03.1997**
(21) Anmeldenummer: 93921900.2
(22) Anmeldetag: 01.10.1993
(51) Int. Cl.: F21M 7/00, B60Q 1/04

(54) **BELEUCHTUNGSVORRICHTUNG, INSBESONDERE SIGNALLEUCHTE FÜR EIN FAHRZEUG**
LIGHTING DEVICE, IN PARTICULAR SIGNALLING LAMP FOR A VEHICLE
DISPOSITIF D'ECLAIRAGE, NOTAMMENT LAMPES DE SIGNALISATION POUR UN VEHICULE

(30) Priorität: 20.10.1992 DE 4235289
(43) Veröffentlichungstag der Anmeldung: 09.08.1995
(73) Patentinhaber: ITT Automotive Europe GmbH, 60488 Frankfurt am Main (DE)
(72) Erfinder: FEGER, Rolf, D-74321 Bietigheim-Bissingen (DE); HOLZMACHER, Günther, D-71679 Asperg (DE)
(86) Internationale Anmeldenummer: EP9302690
(87) Internationale Veröffentlichungsnummer: WO9409310

(56) Entgegenhaltungen:
- DE-A- 1 186 352
- DE-C- 4 011 642
- DE-U- 8 714 177
- FR-A- 2 523 050
- PATENT ABSTRACTS OF JAPAN vol. 16, no. 235 (M-1257)(5278) 29. Mai 1992 & JP,A,04 050 049 (TOYODA GOSEI CO LTD) 19. Februar 1992

## Beschreibung

Die Erfindung betrifft eine Beleuchtungsvorrichtung, insbesondere eine Signalleuchte für ein Fahrzeug, welche aus einem Leuchtengehäuse mit einer Abdeckscheibe besteht, die zumindest stellenweise lichtdurchlässig ist. In dem Leuchtengehäuse, das in mehrere Leuchtenkammern gegliedert sein kann, ist zumindest eine Lichtquelle angeordnet bzw. kann diese angeordnet sein. Die Beleuchtungsvorrichtung ist mit ihrem Leuchtengehäuse ein Teil einer Karosserie, welches nicht von ebener Gestalt sein muß, montierbar, wobei für einen Betrachter ein Spalt zwischen der Beleuchtungsvorrichtung und einem Karosserieteil sichtbar wäre. Unabhängig davon können je nach Gestalt der Beleuchtungsvorrichtung und der Karosserie verschiedene Außenflächen des Leuchtengehäuses für einen Betrachter sichtbar sein.

Allgemein besteht die Forderung, daß derartige Beleuchtungsvorrichtungen mit ihrer näheren Umgebung in dekorativer Weise harmonieren sollen. Unansehnliche Leuchtengehäuseflächen oder Abstände bzw. Spalte zwischen Beleuchtungsvorrichtung und Karosserie werden also vom Betrachter als störend empfunden. Spalte in der Karosserieaußenhaut können sich auch nachteilig auf den Luftwiderstand eines Fahrzeuges auswirken.

Um derartige Abstände in Form von Spalten oder dgl. zu verdecken, werden verschiedenartige, zumeist elastische Dichtungen verwendet, die an der Beleuchtungsvorrichtung, zumindest bis zur Montage der Beleuchtungsvorrichtung an der Karosserie gehalten werden. Meistens sind die Dichtungen an der Beleuchtungsvorrichtung durch Ankleben, durch Einklemmen, durch Verrasten, durch Aufstecken auf eine Rippe oder durch Aufschäumen befestigt. Hauptfunktion dieser bekannten Dichtungen ist aber der Schutz dahinterliegender Räume oder Teile vor dem Zutritt von Schmutz, Wasser, aggressiven Medien und dgl.

In der DE 29 45 733 C2 ist eine Fahrzeugleuchte mit mehreren Glühlampen beschrieben. Diese Fahrzeugleuchte besitzt einen Reflektorkörper, der im wesentlichen das Lampengehäuse mit mehreren Leuchtenkammern bildet. An dem zur Abdeckscheibe benachbarten äußeren Rand des Reflektorkörpers verläuft ein rillenförmiger Flansch in den ein Dichtungsring eingeschäumt ist. Abgesehen davon, daß im allgemeinen eine aufgeschäumte Dichtung auf den Betrachter nicht besonders dekorativ wirkt, ist in diesem Fall kein harmonischer Übergang zwischen Leuchte und Karosserieblech gegeben. Die Dichtung ist im Vergleich zum äußeren Leuchtenrand relativ weit zurückgesetzt, so daß zwischen Leuchte und Karosserie eine deutliche Fuge bestehen bleibt.

Die DE 31 01 398 A1 bezieht sich ebenfalls auf eine Mehrkammerleuchte für Fahrzeuge. Diese Leuchte ist nach vorn durch eine Abdeckplatte verschlossen, welche aus einer Lichtscheibe und einem Zierrahmen zusammengesetzt ist. Der Zierrahmen besitzt zwei vom äußeren Rand unterschiedlich weit zurückgesetzte Rippen. In diesem Bereich ist eine Dichtung eingelegt, die sich zum Teil in dem Bereich zwischen den beiden Rippen befindet und zum anderen Teil die äußere Rippe übergreift. Durch diese Anordnung wird die Dichtung bis zur Montage der Leuchte in ihrer Position gehalten, danach wirkt das Karosserieblech als Gegenhalter. Gemäß einer anderen Ausführung kann die Dichtung auch eingeschäumt sein. Diese Dichtung hat im beschriebenen Fall hauptsächlich Dichtfunktionen zu erfüllen. Für dekorative Zwecke ist diese Dichtung nicht geeignet.

Die DE 34 05 969 C2 befaßt sich mit einer in eine Fahrzeugkarosserie eingesetzten Blinkleuchte. Hier ist eine Dichtlippe aus Gummi auf einen Umfangsrand des Kunststoffgehäuses aufgeklebt. Diese Dichtlippe erstreckt sich vom Kunststoffgehäuse weg und liegt mit der Lippenkante an einem benachbarten Karosserieblech an. Diese Dichtlippe hat hauptsächlich einen Zwischenraum zwischen Leuchtengehäuse und Karosseriewand vor dem Zutritt von Wasser, Schmutz und aggressiven Medien zu schützen. Die Dichtlippe ist in Bezug auf die äußere Karosserie- oder Leuchtenkante relativ weit zurückgesetzt, wodurch eine relativ tiefe Furchung entsteht. Deshalb ist der dekorative Wert dieser Dichtlippe nicht so gut. Abgesehen davon ist das Ankleben einer elastischen Dichtung eine recht umständliche und aufwendige Verfahrensweise.

Die DE 32 09 393 A1 beschreibt eine vordere Blinkleuchte für Kraftfahrzeuge. In den Bereich zwischen der Leuchte und dem benachbarten Bereich der Karosserie ist eine Dichtung aus Gummi eingefügt, welche nicht in sich geschlossen ist. Die beiden Endstücke der Dichtung sind mit einem Haken versehen, der eine Schulter am Gehäuse hintergreift. Durch die eingebrachte Spannung in Längsrichtung der Dichtung legt sich diese an die Blinkleuchte an. Zusätzlich wird von zwei Stegen eine Rille gebildet, in welche die Dichtung mit einem hinterschnittenen Profil einrastet. Im Querschnitt ist die Dichtung U-förmig, wobei der eine Schenkel an der Leuchte und der andere Schenkel an der Karosserie anliegt. Der Verbindungssteg weist nach außen und verdeckt den Spalt zwischen Leuchte und Karosserie. Diese Dichtung scheint in der Lage zu sein, neben ihrer Dichtfunktion auch einen ordentlichen dekorativen Eindruck zu vermitteln. Jedoch erfordert die Montage der Dichtung an der Leuchte einen recht hohen Aufwand, und die Möglichkeit einer maschinellen Montage erscheint fraglich.

Aus der Druckschrift DE 87 14 177.9 U1 ist eine Kraftfahrzeugleuchte mit einem äußeren, durchsichtigen Deckelement bekannt, welches an einem Tragkörper angebracht ist. Um eine Spalte zwischen der Leuchte und der Fahrzeugkarosserie zu verschließen oder abzudecken, ist eine elastische Abdeckung mit einer Lippe umlaufend an den Rand des durchsichtigen Deckelementes aus Glas oder Kunststoff aufgeformt. Nachteilig hierbei ist, daß einerseits das zur Lichtabgabe zur Verfügung stehende Feld des durchsichtigen Deckelementes eingeschränkt ist und andererseits wenig Gestaltungsfähigkeit hinsichtlich einer sicheren Verbindung zwischen Deckelement und elastischer Abdeckung mit Lippe gegeben ist.

Die Aufgabe der Erfindung besteht darin, eine Beleuchtungsvorrichtung der eingangs beschriebenen Art, insbesondere eine Signalleuchte, die an die Karosserie eines Fahrzeugs montierbar ist, auf maschinellem Weg mit Mitteln auszustatten, die einen dekorativ ansprechenden Sichtschutz für einen Abstand zwischen Beleuchtungsvorrichtung und benachbarter Wand und/oder für im Sichtbereich eines Betrachters liegende Außenfläche des Leuchtengehäuses gewährleisten.

Erfindungsgemäß wird die Aufgabe dadurch gelöst, daß bei einer Beleuchtungsvorrichtung gemäß dem Oberbegriff des Anspruchs 1 durch Spritzgießen an ein Teil des Leuchtengehäuses ein elastisches Element aus Kunststoff angespritzt ist, welches eine Sichtschutzlippe beinhaltet, die sich von der Beleuchtungsvorrichtung zu einer benachbarten Wand erstreckt. Im montierten Zustand kann die Sichtschutzlippe linienförmig oder flächig an einer benachbarten Wand anliegen. Zusätzlich ist an die im Sichtbereich liegenden Flächen des Leuchtengehäuses ein dekorativer Kunststoffüberzug von entsprechender Farbe angespritzt. Vorteilhaft ist, wenn elastisches Element bzw. Sichtschutzlippe und Kunststoffüberzug von gleicher Farbe sind. Dies ergibt ein harmonisches Gesamtbild und vereinfacht wesentlich die Herstellung.

Das Anspritzen erfolgt maschinell durch Spritzgießen und gewährleistet eine wirtschaftliche Fertigung in großen Stückzahlen, wobei eine exakte Form und eine exakte Positionierung des elastischen Elementes an der Beleuchtungsvorrichtung eingehalten werden. Das elastische Element ist in der Lage, Toleranzen des Abstandes zwischen der Beleuchtungsvorrichtung und einer benachbarten Wand auszugleichen und als dekorativer Sichtschutz zu wirken.

In der Praxis kann es durchaus vorkommen, daß das Leuchtengehäuse zur Anpassung an die Konturen der Karosserie, an welche die Beleuchtungsvorrichtung zu montieren ist, eine relativ zerklüftete und komplizierte Gestalt besitzt. Es kann also eine Gehäusewand existieren, deren Außenfläche im Sichtbereich liegt und die, beispielsweise mit ihrer Stirnkante, einen Abstand mit einer benachbarten Wand bildet, dessen Anblick in dekorativer Weise optisch verdeckt werden soll. In diesem Fall ist es günstig, wenn gemäß Anspruch 2 zumindest in dem betreffenden Bereich das elastische Element mit Sichtschutzlippe und der Kunststoffüberzug einstückig miteinander verbunden sind. In diesem Fall bilden Kunststoffüberzug und elastisches Element mit Sichtschutzlippe eine körperliche und visuelle Einheit.

Der dekorative Wert als Sichtschutz ist noch verbessert, wenn das elastische Element gemäß Anspruch 2 zumindest an der sichtbaren Außenfläche harmonisch von der Beleuchtungsvorrichtung zu der benachbart Wand übergeht. Dabei kann gemäß Anspruch 3 das elastische Element mit Sichtschutzlippe an einen Rand des Leuchtengehäuses angespritzt sein und die Beleuchtungsvorrichtung vollständig umlaufen. Wenn aber die Beleuchtungsvorrichtung beispielsweise mit einer Seite zu irgendeinem Teil bereits nahezu spaltfrei oder anderweitig in dekorativ ansprechender Weise anzuordnen ist, ist das elastische Element nur an den übrigen Seiten an einem Rand des Leuchtengehäuses angespritzt.

Ein besonders ansprechendes Erscheinungsbild ergibt eine montierte Beleuchtungsvorrichtung, bei der sich gemäß Anspruch 4 die Sichtschutzlippe des an den Rand des Leuchtengehäuses angespritzten elastischen Elementes vom Rand der Abdeckscheibe bis zur benachbarten Wand erstreckt. Das heißt, die Sichtschutzlippe liegt einerseits am äußeren Rand der Abdeckscheibe und andererseits an der benachbarten Wand an und überdeckt somit den Abstand zwischen diesen beiden Teilen. Neben der guten dekorativen Wirkung wird dabei sogar zusätzlich eine Abdichtfunktion gegen das Eindringen von Schmutz, Feuchtigkeit usw. erzielt.

Durch Anspritzen des elastischen Elements an das Leuchtengehäuse erfolgt an der Kontaktierungsfläche von elastischem Element und Leuchtengehäuse eine Vernetzung, deren Ergebnis die Haftung des elastischen Elementes am Leuchtengehäuse ist. Im allgemeinen ist die Haftfestigkeit so groß, daß das angespritzte Element mit Sicherheit gehalten wird. Für den Fall, daß eventuell ein sehr kompliziert geformter Gehäuserand oder komplizierte geometrische Einbauverhältnisse vorliegen oder daß die gewählte Werkstoffkombination keine so gute Vernetzung ergibt, können an einer Anspritzfläche des Leuchtengehäuses gemäß Anspruch 5 noch zusätzliche Verankerungsmittel für das elastische Element vorhanden sein. Diese zusätzlichen Verankerungsmittel sind irgendwelche Stifte, oder Nasen oder dgl. Vorsprünge, die einstückig an das Leuchtengehäuse angeformt sind und von der Anspritzfläche abstehen. Dabei können gemäß Anspruch 6 diese Stifte durch das Material des elastischen Elementes hindurchragen und auf dessen Oberfläche nietähnlich verstemmt sein. Das Verstemmen kann gleichzeitig mit dem Anspritzen in der Spritzgießform erfolgt sein. Für einen Fachmann stellt es kein Problem dar, die Form entsprechend auszubilden. Diese zusätzlichen Verankerungsmittel geben also unter komplizierten Bedingungen eine zusätzliche Sicherheit in Bezug auf die Befestigung des elastischen Elements mit Sichtschutzlippe am Leuchtengehäuse.

Durch Herumziehen des Kunststoffüberzuges um eine Kante des Leuchtengehäuses bis auf eine benachbarte Außenfläche oder bis auf eine benachbarte Stirnkante gemäß Anspruch 7 kann die optische bzw. dekorative Wirkung des Kunststoffüberzuges noch erweitert oder verbessert werden. Man erhält dadurch harmonische Übergänge.

Um sicher zu gehen, daß der Kunststoffüberzug auch bei relativ großflächigen Anspritzungen eine gute und dauerhafte Haftung am Leuchtengehäuse besitzt, erstreckt sich gemäß Anspruch 8 der Kunststoffüberzug zumindest stellenweise um eine Stirnkante des Leuchtengehäuses herum bis auf eine Rückseite der Wand des Leuchtengehäuses, die der angespritzten Außenfläche gegenüberliegt. Dadurch, daß gemäß Anspruch 9 Überzugsmaterial durch zumindest eine Öffnung in der Wand des Leuchtengehäuses hindurchtritt, die Öffnung vollständig ausfüllt und dabei die auf der Außenfläche sowie der Rückseite der Leuchtengehäusewand befindlichen Teile des Kunststoffüberzuges einstückig miteinander verbindet, wird eine noch verbesserte Sicherheit bezüglich der Haftfestigkeit des Kunststoffüberzuges erreicht. Das könnte dann von Bedeutung sein, wenn die angespritzten Flächen relativ groß sind und von sich aus keine Verankerungspunkte aufweisen.

Weitere Vorteile ergeben sich, wenn gemäß Anspruch 11 das Leuchtengehäuse von grauer Farbe und das elastische Element und/oder der Kunststoffüberzug von schwarzer Farbe und gemäß Anspruch 12 das Leuchtengehäuse aus ABS (Acrynitril-Butadien-Styrol) und das elastische Element und/oder der Kunststoffüberzug aus TPE (Thermoplastischer Elastomer) bzw. TPU (Thermoplastischer Elastomer auf Urethanbasis) besteht. Die schwarze Farbe für das elastische Element und /oder die im Sichtbereich liegenden Flächen des Leuchtengehäuses wird bevorzugt, weil diese dekorativ wirksam mit nahezu allen anderen Farben kombinierbar ist, sich also neutral verhält. Andererseits ist insbesondere bei Leuchten, bei denen die Abbdeckscheibe an das Leuchtengehäuse angeschweißt ist, eine graue Farbe des Leuchtengehäuses erwünscht. Beim Schweißen entstehende unförmige Schweißwulste zeichnen sich bei grauem Leuchtengehäusematerial kaum merklich gegenüber der Abdeckscheibe ab, sie wirken also nicht so störend. Bei schwarzem Leuchtengehäusematerial würden die Schweißwulste unschön und sehr kontrastreich in Erscheinung treten. Mit der Erfindung ist eine Beleuchtungsvorrichtung gegeben, die gleichzeitig über relativ unauffällige Schweißwulste und über die gewünschte Schwarzfärbung der sichtbaren Gehäuseflächen verfügt. Dabei sind das elastische Element und der Kunststoffüberzug kostengünstig herstellbar.

Die Werkstoffkombination ABS für das Leuchtengehäuse und TPE bzw. TPU für das elastische Element und den Kunststoffüberzug ist sehr vorteilhaft für eine gute Haftfestigkeit der Anspritzungen am Leuchtengehäuse.

Gemäß einer vorteilhaften Ausgestaltung nach Anspruch 13 ist das Leuchtengehäuse mit angespritztem elastischem Element und/oder angespritztem Kunststoffüberzug im Zweikomponentenspritzgießverfahren hergestellt. Die Beleuchtungsvorrichtung ist somit sehr kostengünstig herstellbar, und es kann eine gleichbleibend gute Qualität gewährleistet werden.

Nachfolgend wird die Erfindung an einem Ausführungsbeispiel näher erläutert, welches sich auf eine Mehrkammerheckleuchte für einen Personenkraftwagen bezieht.

In den zugehörigen Zeichnungen zeigen:
- Figur 1: eine Mehrkammerheckleuchte für einen Personenkraftwagen, komplettiert durch eine separate Nebelschlußleuchte,
- Figur 2: eine Draufsicht auf die Mehrkammerheckleuchte aus Figur 1 jedoch ohne Nebelschlußleuchte,
- Figur 3: ein Gehäuse einer erfindungsgemäßen Mehrkammerheckleuchte mit angespritzter Sichtschutzlippe und angespritztem Kunststoffüberzug,
- Figur 4: einen waagerechten Schnitt durch eine erfindungsgemäße Mehrkammerheckleuchte, an die Karosserie eines Personenkraftwagens montiert,
- Figur 5: den Ausschnitt A aus Figur 4 in vergrößerter Darstellung,
- Figur 6: den Ausschnitt B aus Figur 4 in vergrößerter Darstellung und
- Figur 7: den Schnitt I-I aus Figur 2 in vergrößerter Darstellung.

Die erfindungsgemäße Mehrkammerheckleuchte besteht aus einem Leuchtengehäuse 1 und einer Abdeckscheibe 2. Das Leuchtengehäuse 1 ist durch Spritzgießen hergestellt, besteht aus ABS (Acrynitril-Butadien-Styrol) und ist von grauer Farbe. Da das Leuchtengehäuse für den Anbau an den Heckbereich der Karosserie 3 eines Personenkraftwagens bestimmt ist, sind seine Gestalt bzw. Konturen dem entsprechenden Teil der Karosserie 3 angepaßt. Die Abdeckscheibe 2 besteht aus zwei Schichten Kunststoffmaterial und weist in den Bereichen der einzelnen Leuchtenkammern 4 die der Funktion der jeweiligen Leuchtenkammer 4 entsprechende Transparenz und Färbung auf. Im Bereich des Rückstrahlers ist die Abdeckscheibe 2 mit entsprechenden reflektierenden Mitteln ausgestattet oder unterlegt und ist dadurch zumindest abschnittsweise lichtundurchlässig. Die Abdeckscheibe 2 ist an das Leuchtengehäuse 1 angeschweißt.

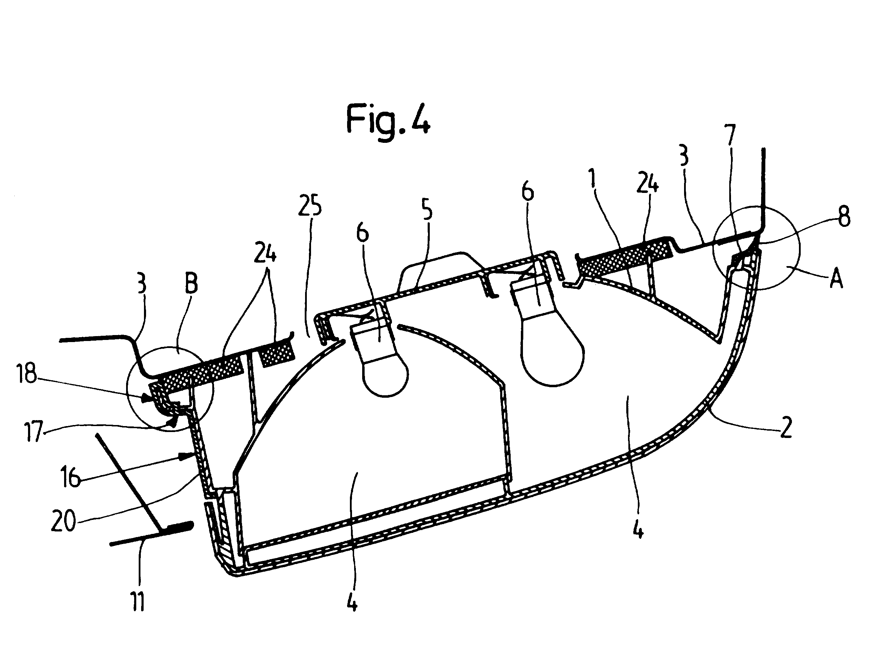

Mittels eines Lampenträgers 5 (Figur 4) können mehrere Glühlampen 6 von der Rückseite des Leuchtengehäuses 1 her bei entsprechender Zuordnung in die Leuchtenkammern 4 eingebracht sein oder eingebracht werden, wobei der Lampenträger 5 in an sich bekannter Weise lösbar am Leuchtengehäuse 1 gehalten ist.

Um einen fertigungsbedingten Spalt, der durch einen zumeist noch mit Toleranzen behafteten Abstand zwischen dem äußeren Rand der Heckleuchte und der benachbarten Wand der Karosserie 3 gebildet wird, für einen Betrachter zumindest vom optischen Eindruck her in dekorativ ansprechender Weise zu verdecken, ist in den betreffenden Bereichen an den äußeren Rand des Leuchtengehäuses 1 durch Spritzgießen ein elastisches Element 7 aus schwarzem TPE (Thermoplastischer Elastomer) angespritzt. Dieses elastische Element 7 beinhaltet eine Sichtschutzlippe 8, die sich von der Mehrkammerheckleuchte in Richtung der benachbarten Wand der Karosserie 3 erstreckt. Im angebauten Zustand (Figur 4) liegt dabei die Sichtschutzlippe 8 sowohl am äußeren Rand der Abdeckscheibe 2 als auch an der benachbarten Wand der Karosserie 3 an. Dadurch wird ein harmonischer, für das Gesamtbild vorteilhafter Übergang zwischen Mehrkammerheckleuchte und Karosserie 3 geschaffen.

Selbst wenn die Sichtschutzlippe 8 nicht an der benachbarten Wand der Karosserie 3 anläge, d.h. kurz vor der Karosserie 3 enden würde, würde dem Betrachter ein Eindruck vermittelt, als sei der Spalt zwischen Heckleuchte und Karosserie 3 verdeckt.

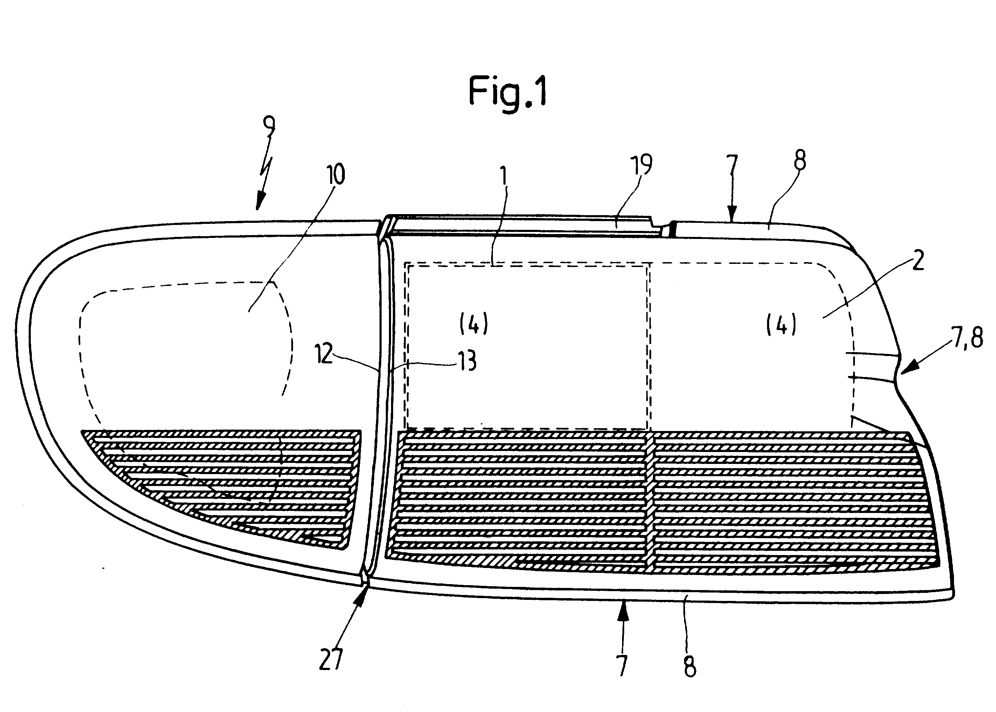

In Figur 1 ist zusätzlich zu der Mehrkammerheckleuchte eine ergänzende separate Nebelschlußleuchte 9 dargestellt. Diese Nebelschlußleuchte 9 besitzt ein Leuchtengehäuse, an welches eine rote, transparente Abdeckscheibe 10 angeschweißt ist. In das Leuchtengehäuse der Nebelschlußleuchte 9 ist von deren Rückseite her eine Glühlampe eingebracht bzw. einbringbar. Die Nebelschlußleuchte 9 ist im Heckbereich des Personenkraftwagens an dessen Kofferklappe 11 bzw. Hecktür derart anzubauen, daß bei geschlossener Kofferklappe 11 eine Seite 12 der Nebelschlußleuchte 9 in geringem Abstand neben einer Seite 13 der Mehrkammerheckleuchte liegt. Dabei sind die sichtbaren Teile bzw. Konturen von Nebelschlußleuchte 9 und Mehrkammerheckleuchte nahezu spiegelsymmetrisch ausgebildet, so daß sich aus einem gewissen Abstand betrachtet der Eindruck einer einzigen Heckleuchte ergibt. An den Seiten 12 und 13 der Nebelschlußleuchte 9 bzw. der Mehrkammerheckleuchte befindet sich demzufolge kein angespritztes elastisches Element 7 bzw. keine Sichtschutzlippe 8.

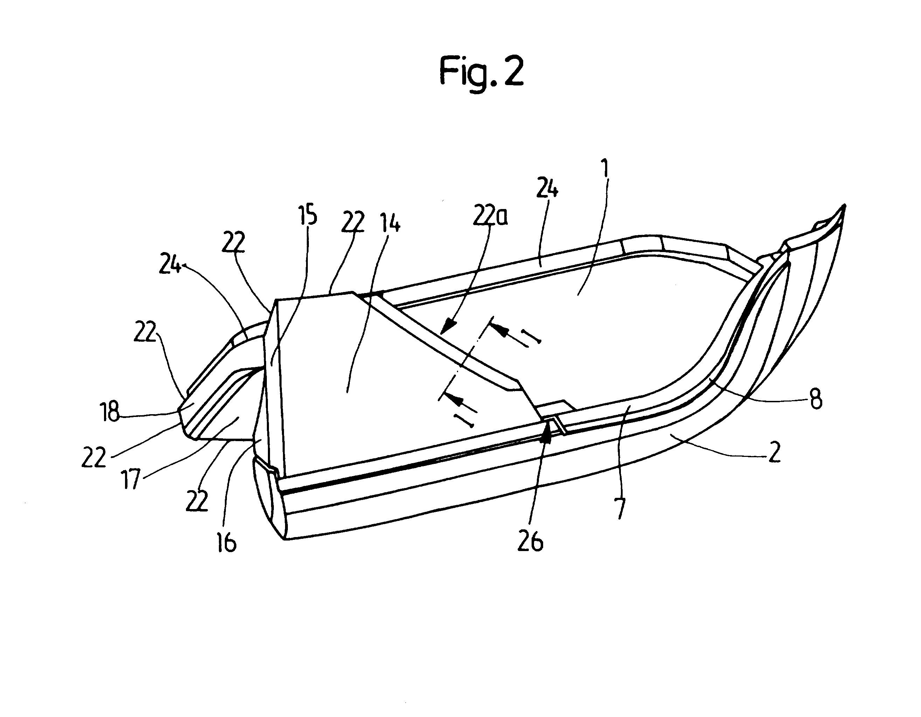

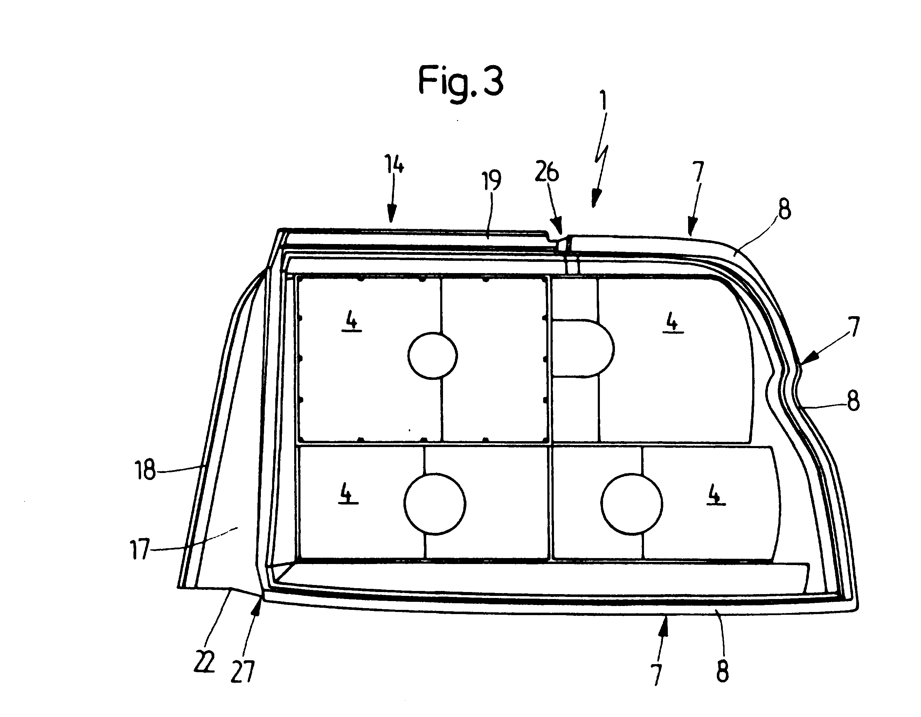

Das Leuchtengehäuse 1 besitzt mehrere Außenflächen 14, 15, 16, 17, 18, 19, die unter bestimmten Umständen für einen Betrachter sichtbar sind und aus diesem Grund ein dekoratives Aussehen haben sollen, welches sich harmonisch in das Gesamtbild einfügt. Die Außenflächen 14 - 18 sind in diesem konkreten Ausführungsbeispiel nur bei geöffneter Kofferklappe 11 sichtbar, wohingegen die Außenfläche 19 beim Blick auf die Rückseite des Personenkraftwagens auch bei geschlossener Kofferklappe 11 sichtbar ist. Die Lage dieser sichtbaren Außenflächen 14 - 19 ist aus den Figuren 2 und 3 ersichtlich. Erfindungsgemäß ist an diese Flächen 14 - 19 ein Kunststoffüberzug 20 aus schwarzem TPE (Thermoplastischer Elastomer) mittels Spritzgießen angespritzt. Da die Außenflächen 14 - 19 alle zueinander benachbart sind, erstreckt sich der Kunststoffüberzug 20 vorteilhaft jeweils um eine Kante einer Außenfläche herum auf eine benachbarte Außenfläche. Die Außenflächen 14 - 19 sind also zusammenhängend von einem einzigen angepritzten Kunststoffüberzug bedeckt. Der Kunststoffüberzug 20 bildet eine mattschwarze, gummiähnliche Oberfläche, die den Außenflächen 14 - 19 des Leuchtengehäuses ein unaufdringliches, ansprechenden Aussehen verleiht, welches sich dekorativ in den Gesamtanblick eingliedert.

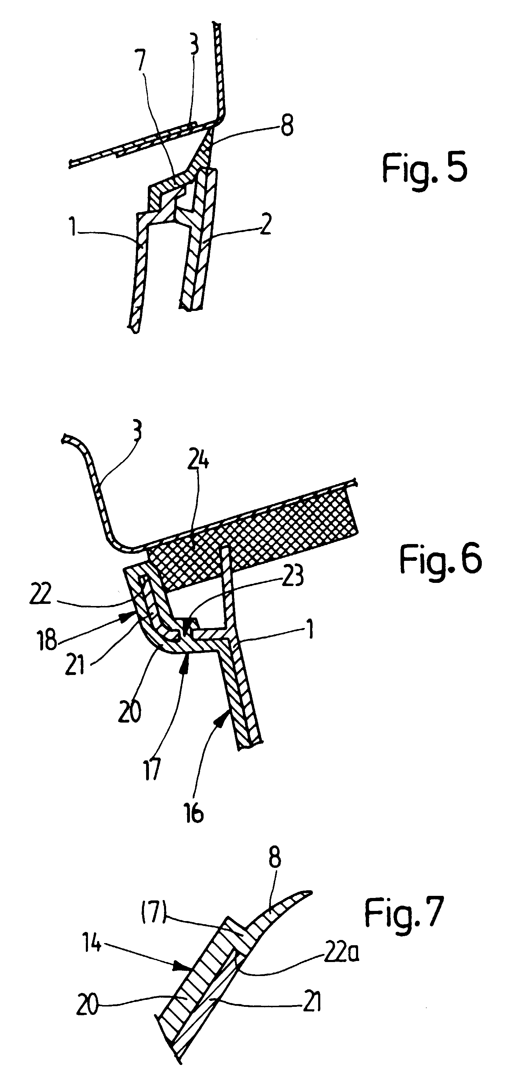

Die Außenflächen 14 - 19 befinden sich jeweils auf einer Leuchtengehäusewand 21, die zumindest eine freie Stirnkante 22, 22a besitzt. Vorteilhafterweise erstreckt sich der Kunststoffüberzug 20 bis auf diese Stirnkanten 22, 22a, wodurch die Sicherheit der Haftung des Kunststoffüberzuges 20 verbessert wird. Zumindest abschnittweise ist, wie aus Figur 6 und 7 ersichtlich, der Kunststoffüberzug 20 bis auf die Rückseite der Leuchtengehäusewand 21 herumgespritzt. Um die Haftung des Kunststoffüberzuges 20 noch weiter zu verbessern, sind an bestimmten Stellen in der Leuchtengehäusewand 21 Öffnungen 23 vorhanden, wobei durch diese Öffnungen 23 hindurchgetretenes Überzugsmaterial den Teil des Kunststoffüberzuges 20 auf der Außenfläche mit dem Teil des Kunststoffüberzuges auf der Rückseite der Leuchtengehäusewand 21 einstückig verbindet.

In Figur 2 ist deutlich die Außenfläche 14 des Leuchtengehäuses 1 erkennbar. Im angebauten Zustand der Heckleuchte verläuft diese Außenfläche 14, die sich auf einer Leuchtengehäusewand 21 befindet, nahezu waagerecht. Die Stirnkante 22a dieser Leuchtengehäusewand 21 befindet sich im angebauten Zustand der Heckleuchte ebenfalls in einem Abstand von einer Wand der Karosserie 3. Der dadurch entstehende Spalt wäre bei geöffneter Kofferklappe 11 ebenso wie die Außenfläche 14 für einen Betrachter sichtbar. Deshalb ist auch an diese Leuchtengehäusewand 21 im Bereich der Stirnkante 22 a quasi ein elastisches Element 7 mit Sichtschutzlippe 8 angespritzt. Da an die Außenfläche 14 ein Kunststoffüberzug 20 angespritzt ist, sind das elastische Element 7 mit Sichtschutzlippe 8 und der Kunststoffüberzug in diesem Bereich vorteilhafterweise einstückig miteinander verbunden. Das ist möglich, weil der Kunststoffüberzug 20 und das elastische Element 7 mit Sichtschutzlippe 8 aus dem gleichen Material bestehen. Dadurch wird natürlich die Herstellung wesentlich vereinfacht, weil alle Kunststoffteile in einem einzigen Arbeitsschritt anspritzbar sind.

Bei anderer Betrachtungsweise kann man auch davon ausgehen, daß sich der Kunststoffüberzug 20 gemäß einer Weiterbildung nach Anspruch 10 an der Außenfläche 14 bis auf die Stirnkante 22 a erstreckt und daß in diesem Bereich eine Sichtschutzlippe 8 direkt einstückig an den Kunststoffüberzug 20 angeformt ist. In diesem Fall würde einem Teil des Kunststoffüberzuges gleichzeitig die Funktion des elastischen Elementes 7 zukommen.

Aus Figur 4 ist auch ersichtlich, daß sich zwischen Bereichen der Rückseite des Leuchtengehäuses 1 und der Karosserie 3 extra noch ein Dichtungselement 24 befindet. Dieses Dichtungselement 24 hat die Aufgabe, rückseitige Bereiche der Mehrkammerheckleuchte und den für den Anbau der Heckleuchte erforderlichen Durchbruch 25 in der Wand der Karosserie 3 vor dem Zutritt von Feuchtigkeit, Staub, Schmutz, aggressiven Medien und ähnlichem zu schützen. Das elastische Element 7 bzw. die Sichtschutzlippe 8 hat eigentlich keine Abdichtfunktion zu erfüllen. Allerdings gibt es Bereiche, in denen das elastische Element 7 bzw. die Sichtschutzlippe 8 sowohl an der Mehrkammerheckleuchte als auch an der Karosserie 3 anliegt. Somit ergibt sich in diesen Bereichen eine zusätzliche Abdichtung durch das elastische Element 7 bzw. die Sichtschutzlippe 8.

An der Stelle 26 am oberen Rand und an der Stelle 27 an der Ecke des unteren Randes mit der Seite 13 der Mehrkammerheckleuchte gehen das elastische Element 7 mit Sichtschutzlippe 8 und der Kunststoffüberzug 20 unmittelbar ineinander über. Sie sind an diesen Stellen 26, 27 ebenfalls einstückig miteinander verbunden.

Es sei noch darauf hingewiesen, daß diese erfindungsgemäße Mehrkammerheckleuchte für einen Personenkraftwagen besonders kostengünstig ist, weil das Leuchtengehäuse 1 mit angespritztem elastischem Element 7 mit Sichtschutzlippe 8 und/oder mit angespritztem Kunstoffüberzug 20 in einem Zweikomponentenspritzgießverfahren hergestellt ist.

## Patentansprüche

1. Beleuchtungsvorrichtung für ein Fahrzeug, bestehend aus einem Leuchtengehäuse (1) und einer zumindest stellenweise lichtdurchlässigen Abdeckscheibe (2), wobei zumindest eine Lichtquelle (6) im Leuchtengehäuse (1) angeordnet ist oder angeordnet werden kann und wobei die Sicht auf einen Spalt zwischen der Beleuchtungsvorrichtung bzw. einem Teil der Beleuchtungsvorrichtung und der Fahrzeugkarosserie (3) zu verdecken ist und im Sichtbereich eines Betrachters liegende Außenflächen (14-19) des Leuchtengehäuses (1) einen dekorativen Anblick vermitteln sollen, dadurch **gekennzeichnet,** daß das Leuchtengehäuse (1) ein durch Spritzgießen angespritztes elastisches Element (7) mit einer Sichtschutzlippe (8), die sich von der Beleuchtungsvorrichtung in Richtung auf die benachbarte Wand der Fahrzeugkarosserie (3) erstreckt, und im Sichtbereich eines Betrachters liegende Außenflächen (14-19) mit einem durch Spritzgießen angespritzten elastomeren Kunststoffüberzug (20), insbesondere aus dem gleichen elastomeren Material wie das elastische Element (7) mit Sichtschutzlippe (8), aufweist.

2. Beleuchtungsvorrichtung nach Anspruch 1, dadurch **gekennzeichnet,** daß das elastische Element (7) mit Sichtschutzlippe (8) und der Kunststoffüberzug (20) zumindest bereichsweise einstückig miteinander verbunden sind.

3. Beleuchtungsvorrichtung nach Anspruch 1 oder 2, dadurch **gekennzeichnet,** daß das elastische Element (7) mit Sichtschutzlippe (8) stellenweise oder vollständig umlaufend an einen Rand des Leuchtengehäuses (1) angespritzt ist.

4. Beleuchtungsvorrichtung nach einem der vorhergehenden Ansprüche, dadurch **gekennzeichnet**, daß die Sichtschutzlippe (8) im montierten Zustand der Beleuchtungsvorrichtung einerseits am äußeren Rand der Abdeckscheibe (2) und andererseits an der benachbarten Wand der Fahrzeugkarosserie (3) anliegt.

5. Beleuchtungsvorrichtung nach einem der vorhergehenden Ansprüche, dadurch **gekennzeichnet,** daß das Leuchtengehäuse (1) an einer Anspritzfläche für das elastische Element (7) zusätzliche Verankerungsmittel in Form von einstückig von der Anspritzfläche abstehenden Stiften, Nasen oder dergleichen Vorsprüngen besitzt.

6. Beleuchtungsvorrichtung nach Anspruch 5, dadurch **gekennzeichnet,** daß die Stifte durch das Material des elastischen Elementes (7) hindurchragen und auf der Oberfläche des elastischen Elementes (7) verstemmt sind.

7. Beleuchtungsvorrichtung nach einem der vorhergehenden Ansprüche, dadurch **gekennzeichnet,** daß sich der Kunststoffüberzug (20) um eine Kante einer Außenfläche (1419) herum bis auf eine benachbarte Außenfläche erstreckt.

8. Beleuchtungsvorrichtung nach einem der vorhergehenden Ansprüche, dadurch **gekennzeichnet,** daß sich der Kunststoffüberzug (20) zumindest abschnittsweise um eine Stirnkante (22, 22a) einer Leuchtengehäusewand(21) herum bis auf deren Rückseite erstreckt.

9. Beleuchtungsvorrichtung nach Anspruch 8, dadurch **gekennzeichnet,** daß sich in der Leuchtengehäusewand (21) mit dem angespritzten Kunststoffüberzug (20) zumindest eine Öffnung (23) befindet und daß durch diese Öffnung (23) hindurchgetretenes Überzugsmaterial den Teil des Kunststoffüberzuges (20) auf der Außenfläche (14-19) mit dem Teil des Kunststoffüberzuges auf der Rückseite der Leuchtengehäusewand (21) einstückig verbindet.

10. Beleuchtungsvorrichtung nach einem der vorhergehenden Ansprüche, dadurch **gekennzeichnet,** daß sich der Kunststoffüberzug (20) bis auf eine Stirnkante (22,22a) erstreckt und daß in diesem Bereich direkt an den Kunststoffüberzug (20) eine Sichtschutzlippe (8) angeformt ist.

11. Beleuchtungsvorrichtung nach einem der vorhergehenden Ansprüche, dadurch **gekennzeichnet**, daß das Leuchtengehäuse (1) von grauer Farbe und das elastische Element (7) und/oder der Kunststoffüberzug (20) von schwarzer Farbe ist.

12. Beleuchtungsvorrichtung nach einem der vorhergehenden Ansprüche, dadurch **gekennzeichnet,** daß das Leuchtengehäuse (1) aus ABS (Acrynitril-Butadien-Styrol) und das elastische Element (7) und/oder der Kunststoffüberzug (20) aus TPE (Thermoplastischer Elastomer) bzw. TPU (Thermoplastischer Elastomer auf Urethanbasis) besteht.

13. Beleuchtungsvorrichtung nach einem der vorhergehenden Ansprüche, dadurch **gekennzeichnet,** daß das Leuchtengehäuse (1) mit angespritztem elastischen Element (7) mit Sichtschutzlippe (8) und mit angespritztem Kunststoffüberzug (20) im Zweikomponentenspritzgießverfahren hergestellt ist.

## Claims

1. A lighting device for a vehicle including a lamp housing (1) and a cover plate (2) which at least in some areas is translucent, wherein at least one light source (6) is arranged or arrangeable in the lamp housing (1), wherein the view on a gap between the lighting device or rather between a part of the lighting device and the vehicle body (3) is to be covered, and wherein outer surfaces (14 through 19) of the lamp housing (1) which lie in the visual range of a beholder are destined to convey a decorative aspect,
characterized in that the lamp housing (1) includes an elastic element (7) injection-moulded thereon with a masking lip (8) extending from the lighting device in the direction of the adjacent wall of the vehicle body (3), and outer surfaces (14 through 19) lying in the visual range of a beholder and provided with an elastomeric plastic coating (20) which is injection-moulded thereon and in particular is made of the same elastomeric material as the elastic element (7) with masking lip (8).

2. A lighting device as claimed in claim 1,
characterised in that the elastic element (7) with masking lip (8) and the elastic coating (20) are integrally united at least in some areas.

3. A lighting device as claimed in claim 1 or in claim 2,
characterised in that, in some areas or in a completely surrounding manner, the elastic element (7) with masking lip (8) is injection-moulded on an edge of the lamp housing (1).

4. A lighting device as claimed in any one of the preceding claims,
characterised in that, in the assembled condition of the lighting device, the masking lip (8) rests on the outer edge of the cover plate (2), on the one hand, and on the adjacent wall of the vehicle body (3), on the other hand.

5. A lighting device as claimed in any one of the preceding claims,
characterised in that an injection-moulding surface of the lamp housing (1) includes additional anchoring means for the elastic element (7) in the form of pins, cams or similar projections integrally projecting from the injection-moulding surface.

6. A lighting device as claimed in claim 5,
characterised in that the pins project through the material of the elastic element (7) and are caulked on the surface of the elastic element (7).

7. A lighting device as claimed in any one of the preceding claims,
characterised in that the plastic coating (20) extends around an edge of an outer surface (14 through 19) up to and on an adjacent outer surface.

8. A lighting device as claimed in any one of the preceding claims,
characterised in that, at least in some areas, the plastic coating (20) extends around a front edge (22, 22a) of a lamp housing wall (21) up to and on the back side of the same.

9. A lighting device as claimed in claim 8,
characterised in that at least one opening (23) is provided in the lamp housing wall (21) with injection-moulded plastic coating (20), and in that coating material that has passed through this opening (23) integrally unites the part of the plastic coating (20) on the outer surface (14 through 19) with the part of the plastic coating on the back side of the lamp housing wall (21).

10. A lighting device as claimed in any one of the preceding claims,
characterised in that the plastic coating (20) extends up to and on a front edge (22, 22a), and in that, in this area, a masking lip (8) is directly moulded integrally to the plastic coating (20).

11. A lighting device as claimed in any one of the preceding claims,
characterised in that the colour of the lamp housing (1) is gray and the colour of the elastic element (7) and/or the plastic coating (20) is black.

12. A lighting device as claimed in any one of the preceding claims,
characterised in that the lamp housing (1) is of ABS (acrylonitrile-butadiene-styrene), and in that the elastic element (7) and/or the plastic coating (20) is of TPE (thermoplastic elastomer) or TPU (thermoplastic urethane-based elastomer), respectively.

13. A lighting device as claimed in any one of the preceding claims,
characterised in that the lamp housing (1) with injection-moulded elastic element (7) with masking lip (8) and with injection-moulded plastic coating (20) is manufactured by a two-component injection moulding process.

## Revendications

1. Dispositif d'éclairage pour véhicule, constitué d'un boîtier de feux (1) et d'une glace de recouvrement (2) laissant passer la lumière au moins par endroits, tandis qu'au moins une source de lumière (6) est disposée ou peut être disposée dans le boîtier de feux (1) et que la vue sur une fente existant entre le dispositif d'éclairage, ou une partie du dispositif d'éclairage, et la carrosserie de véhicule (3) doit être masquée et des surfaces extérieures (14-19) du boîtier de feux (1) qui sont situées dans le champ de vision d'un observateur doivent offrir un aspect extérieur décoratif, caractérisé en ce que le boîtier de feux (1) comprend un élément élastique (7), mis en place par coulée par injection et comportant une lèvre de camouflage (8) qui s'étend à partir du dispositif d'éclairage en direction de la paroi adjacente de la carrosserie de véhicule (3), et des surfaces extérieures (14-19) situées dans le champ de vision d'un observateur et comportant un revêtement de matière plastique élastomère (20) qui est mis en place par coulée par injection et qui est fait notamment de la même matière élastomère que l'élément élastique (7) à lèvre de camouflage (8).

2. Dispositif d'éclairage selon la revendication 1, caractérisé en ce que l'élément élastique (7) à lèvre de camouflage (8) et le revêtement de matière plastique (20) sont reliés l'un à l'autre, d'une seule pièce, au moins par endroits.

3. Dispositif d'éclairage selon la revendication 1 ou 2, caractérisé en ce que l'élément élastique (7) à lèvre de camouflage (8) est mis en place par injection sur un bord du boîtier de feux (1), par endroits ou en en faisant totalement le tour.

4. Dispositif d'éclairage selon l'une des revendications précédentes, caractérisé en ce qu'à l'état monté du dispositif d'éclairage, la lèvre de camouflage (8) prend appui d'une part sur le bord extérieur de la glace de recouvrement (2) et d'autre part sur la paroi adjacente de la carrosserie de véhicule (3).

5. Dispositif d'éclairage selon l'une des revendications précédentes, caractérisé en ce que, sur une surface de dépôt par injection prévue pour l'élément élastique (7), le boîtier de feux (1) comporte des moyens supplémentaires d'ancrage se présentant sous forme de tétons, talons ou parties en saillie analogues qui se dressent d'une seule pièce sur la surface de dépôt par injection.

6. Dispositif d'éclairage selon la revendication 5, caractérisé en ce que les tétons traversent la matière de l'élément élastique (7) et sont rabattus sur la surface de l'élément élastique (7).

7. Dispositif d'éclairage selon l'une des revendications précédentes, caractérisé en ce que le revêtement de matière plastique (20) s'étend autour d'une arête d'une surface extérieure (14-19) jusque sur une surface extérieure adjacente.

8. Dispositif d'éclairage selon l'une des revendications précédentes, caractérisé en ce que le revêtement de matière plastique (20) s'étend, au moins par endroits, autour d'une arête frontale (22, 22a) d'une paroi de boîtier de feux (21) jusque sur la face arrière de cette paroi.

9. Dispositif d'éclairage selon la revendication 8, caractérisé en ce qu'au moins une ouverture (23) est prévue dans la paroi de boîtier de feux (21) comportant le revêtement de matière plastique (20) déposé par injection et en ce que de la matière de revêtement qui traverse cette ouverture (23) relie, d'une seule pièce, la partie du revêtement de matière plastique (20) qui est située sur la surface extérieure (14-19) à la partie du revêtement de matière plastique qui est située sur la face arrière de la paroi de boîtier de feux (21).

10. Dispositif d'éclairage selon l'une des revendications précédentes, caractérisé en ce que le revêtement de matière plastique (20) s'étend jusqu'à une arête frontale (22, 22a) et en ce qu'une lèvre de camouflage (8) est réalisée au formage directement sur le revêtement de matière plastique (20) dans cette zone.

11. Dispositif d'éclairage selon l'une des revendications précédentes, caractérisé en ce que le boîtier de feux (1) est de couleur grise et en ce que l'élément élastique (7) et/ou le revêtement de matière plastique (20) sont de couleur noire.

12. Dispositif d'éclairage selon l'une des revendications précédentes, caractérisé en ce que le boîtier de feux (1) est fait d'ABS (acrylonitrile-butadiène-styrène) et l'élément élastique (7) et/ou le revêtement de matière plastique (20) sont faits de TPE (élastomère thermoplastique) ou de TPU (élastomère thermoplastique à base d'uréthanne).

13. Dispositif d'éclairage selon l'une des revendications précédentes, caractérisé en ce que le boîtier de feux (1) est réalisé avec un élément élastique (7) à lèvre de camouflage (8), qui est déposé par injection, et avec un revêtement de matière plastique (20) déposé par injection, suivant le procédé de coulée par injection à deux composants.
